# EUROPEAN PATENT SPECIFICATION

(11) **EP 0 910 471 B1**
(45) Date of publication and mention of the grant of the patent: **20.10.2004**
(21) Application number: 97932296.3
(22) Date of filing: 25.06.1997
(51) Int. Cl.: B01J 31/26, B01J 31/32

(54) **PROCESS FOR PREPARING A SUPPORTED METALLOCENE CATALYST FOR OLEFIN POLYMERIZATION**
VERFAHREN ZUR HERSTELLUNG EINES GETRÄGERTEN METALLOCENKATALYSATORS ZUR OLEFINPOLYMERISATION
PROCEDE DE PREPARATION D'UN CATALYSEUR METALLOCENE SUR SUPPORT POUR LA POLYMERISATION D'OLEFINES

(30) Priority: 11.07.1996 US 682818
(43) Date of publication of application: 28.04.1999
(73) Proprietor: EXXONMOBIL OIL CORPORATION, Fairfax, VA 22037 (US)
(72) Inventor: MINK, Robert, Ivan, Warren, NJ 07059 (US); NOWLIN, Thomas, Edward, Cranbury, NJ 08512 (US); KISSIN, Yury, Viktorovich, East Brunswick, NJ 08816 (US); LO, Frederick, Yip-Kwai, Piscataway, NJ 08854 (US)
(74) Representative: Hucker, Charlotte Jane
(86) International application number: PCT/US1997/011092
(87) International publication number: WO 1998/002246

(56) References cited:
- EP-A- 0 516 458
- WO-A-95/11263
- WO-A-95/11293
- US-A- 5 206 199
- US-A- 5 332 706

## Description

The invention relates to a process for the preparation of improved catalysts and to modifications and improvements in polymerization and copolymerization of ethylene, undertaken in the presence of catalysts comprising metallocenes of transition metals. The catalysts are characterized by extremely high activity. The catalysts made by the process of the invention operate smoothly in the gas phase, e.g. fluid bed. The catalysts produce high molecular weight polymer at temperature and pressure conditions typically found in a commercial fluid bed reactor. Moreover, the catalyst yields high bulk density, granular linear low density polyethylene in slurry polymerizations without reactor fouling. The polymer products have narrow molecular weight distribution, are free of gels, and, for linear low density have homogeneous comonomer distribution. Reactor fouling is eliminated in both gas phase fluid bed and slurry polymerizations.

Polyethylene is produced commercially in a gas phase reaction in the absence of solvents by employing selected chromium and titanium-containing catalysts under specific operating conditions in a fluid bed process. Polyethylene products of those original processes exhibited medium-to-broad molecular weight distribution. To be commercially useful in the gas phase fluid bed process, or slurry reactor process, undertaken at low pressures less than about 6.9 mPa (1000 psi), the catalyst must exhibit high activity, with concomitant high catalyst productivity, because these process systems do not include catalyst residue removal procedures. Accordingly, catalyst residue in the polymer product must be so small that it can be left in the polymer without causing any undue problems in the fabrication and/or to the ultimate consumer. To this end, the patent literature is replete with developments of new catalysts.

The use of metallocene compounds of transition metals as catalysts for polymerization and copolymerization of ethylene is one of those developments. Metallocenes can be described by the empirical formula CpₘMAₙBₚ. These compounds in combination with methylalumoxane (MAO) have been used to produce olefin polymers and copolymers, such as ethylene and propylene homopolymers, ethylene-butene and ethylene-hexene copolymers.

Aluminoxanes, e.g. methylalumoxane (MAO), have been used as co-catalyst with metallocene catalysts. The class of alumoxanes (used interchangeably hereinafter with "aluminoxane") comprises oligomeric linear and/or cyclic alkylalumoxanes represented by the formula:
R-(Al(R)-O)ₙ-AlR₂ for oligomeric, linear alumoxanes and (-Al(R)-O-)ₘ for oligomeric cyclic alumoxane wherein n is 1-40, preferably 10-20, m is 3-40, preferably 3-20 and R is a C₁-C₈ alkyl group and preferably methyl. Methylalumoxane is commonly produced by reacting trimethylaluminum with water or with hydrated inorganic salts, such as CuSO₄.5H₂O or Al₂(SO₄)₃.5H₂O. Methylalumoxane can be also generated in situ in polymerization reactors by adding to them trimethylaluminum and water or water-containing inorganic salts. MAO is a mixture of oligomers with a very wide distribution of molecular weights and usually with an average molecular weight of about 900-1200. MAO is typically kept in solution in toluene. While the MAO solutions remain liquid at fluid bed reactor temperatures, the MAO itself is a solid at room temperature.

The slow development of the metallocene catalysts has been in part attributable to the aluminoxane (hereinafter used interchangeably with "alumoxane") reagent used to activate. It was discovered that extensive reactor fouling results when MAO solutions are fed directly into the gas phase reactor in large enough quantities to provide this liquid contact with metallocene compound. The fouling occurs because the MAO solution forms a liquid film on the interior walls of the reactor. The catalyst is activated when it comes into contact with this liquid film, and the activated catalyst reacts with ethylene to form a polymer coating which grows larger in size until the reactor is fouled. In addition, since substantially all of the activation takes place on the walls, the MAO is not uniformly distributed to the catalyst particles. The resulting non-homogeneous polymerization gives low catalyst activity and poor product properties.

EP-A-0516458 discloses an olefin polymerisation catalyst (A-1) comprising an alumoxane and a metallocene supported on a silica carrier, and which is used with an organoaluminium cocatalyst (C-2). The catalyst component (A-1) is prepared by contacting each of the components in an inert hydrocarbon solvent.

WO-A-9511263 discloses an olefin polymerisation catalyst comprising silica, a transition metal and aluminium, which is prepared by contacting silica with a mixture of a metallocene and an alumoxane in a solvent selected from aromatic hydrocarbons, ethers, cyclic ethers and esters, preferably where the solvent is toluene.

The invention relates to a process for the production of a metallocene catalyst which does not require an aluminoxane cofeed to the polymerization reactor. Moreover, the catalysts produced by the process of the invention exhibit high activity and productivity, in the fluid bed gas phase and slurry polymerization and copolymerization of olefins.

The problems invoked by the use of an alumoxane, methylalumoxane, in catalyst production are addressed by the process of the invention, which comprises impregnation of a carrier material impregnated with alumoxane and derivatives thereof, and which is in claim 1.

### Catalyst Composition

The catalysts produced by the process of the invention comprise a carrier, an alumoxane and at least one metallocene.

The process of the invention results in supported catalysts of transition metals and aluminum, with very uniform distribution of metals within catalyst particles and among catalyst particles. NMR and FTIR characterization indicates that the alumoxane component of the catalyst reacts with silica hydroxyl groups; NMR reveals substantially complete reaction, and consumption of, alumoxane; in accordance with the invention, the alumoxane reacts with a silica support.

The catalyst produced by the process of the invention is free-flowing and particulate in form comprising dry powder particles having an average particle size of from 1 micron to 250 microns, preferably from 4 microns to 150 microns. The catalysts which contain only one transition metal in the form of a metallocene have an activity expressed in kg polymer/g of transition metals. The aluminoxane and metallocene loading on the carrier is such that the amount of aluminum, (elemental basis) provided by the aluminoxane, on the carrier ranges from 1 to 40 wt.%, preferably from 5 to 30 wt.%, and most preferably from 5 to 15 wt.%. The optimum MAO loading is in the range of 3 to 15 mmoles per gram of silica carrier; if a silica carrier is overloaded with MAO, the catalyst activity is lower and the catalyst particles agglomerate with attendant problems of feeding and resin agglomeration.

The amount of metallocene on the carrier ranges, on a transition metal elemental basis, from 0.001 to 10 wt.%, preferably from 0.05 to 0.4 wt.%. Accordingly the ratio of Al:Zr (on an elemental basis) in the catalyst produced by the process of the invention can range from 25 to 10,000, usually within the range of from 70 to 980 but preferably from 70 to 350 and most preferably from 100 to 350.

The carrier material is silica. In the most preferred embodiment, the silica is in the form of spherical particles, e.g., as obtained by a spray-drying process. The carrier material is used in the form of a dry powder having an average particle size of from 1 micron to 500 microns, preferably from 1 micron to 250 microns, and most preferably 10 microns to 150 microns average particle size. If necessary the final catalyst containing carrier material produced by the process of the present invention may be sieved to insure elimination of large catalyst particles. Presently, elimination of catalyst particles that have a particle size of greater than 500 microns is envisaged; preferably, elimination of particles of greater than 250 micron particle size, and, most preferably, elimination of particles of greater than 150 micron particle size is undertaken. Sieving of the material is preferably undertaken after impregnation of the carrier with the metallocene and the aluminoxane. This is highly desirable in the embodiment of the invention, in which the catalyst contains only one transition metal in the form of a metallocene and which is used to form narrow molecular weight LLDPE, to reduce and/or to eliminate gels in the final polyolefin product and to eliminate reactor hot spots, thereby to insure reactor continuity, particularly in the gas phase fluid bed process. The surface area of the carrier is at least 3 square meters per gram (m²/g), preferably, 5 to 1200 square meters per gram (m²/g) and most preferably at least 50 m²/g up to 600 m²/g. The pore volume of the carrier will range from 0.1 to 5 cm³/g, preferably from 0.5 to 3.5 cm³/g. The carrier material should be dry, that is, free of physically absorbed water.

The silica contains [OH] groups or other functional groups that contain active hydrogen. The carrier material must have at least some active hydroxyl [OH] groups. The hydroxyl group concentration is preferably at least 0.7 mmol/gram silica. More preferably, the hydroxyl group concentration of the silica will range from 1.6 to 2.5 mmol/gram silica. This range is favored by lower drying, dehydration and/or calcination temperatures.

Alternatively, the silica surface can be modified, well known to people familiar with the art, to provide active functional groups to react with alumoxane. The active functional group could be from hydroxyl, alcohols, acids, phenols, and silanols.

The silica hydroxyl (herein silanol, silica hydroxyl is used interchangeably) groups are detectable by IR spectroscopy. Quantitative determinations of the hydroxyl concentration on silica are made by contacting a silica sample with methyl magnesium bromide and measuring methane evolution (by pressure determination).

Dehydration of silica material can be effected by heating at 100°C to 600°C, preferably from 150°C to 300°C and most preferably at 250°C.

By comparison, silica dehydrated at 600°C (for 16 hours) will have a surface hydroxyl concentration of 0.7 mmoles per gram (mmol/g) of silica. Silica dehydrated at 800°C will be a silica with 0.5 mmol of silica hydroxy per gram silica. The most preferred type of silica used in the process of the present invention is a high surface area, amorphous silica (surface area = 300 m²/g; pore volume of 1.65 cm³/g), and it is a material marketed under the tradenames of Davison 948, 952 or 955 by the Davison Chemical Division of W. R. Grace and Company. As purchased, the silicas are not dehydrated and must be dehydrated prior to use.

The effect of increasing silica hydroxyl groups on the catalyst activity and productivity is a positive one. In order to produce catalysts exhibiting highest activity, the silica should contain hydroxyl groups for contact with the solution containing aluminoxane and metallocene, described below. It was determined that reaction of the hydroxyl groups of the silica with scavengers, such as trialkylaluminum compounds, e.g., trimethylaluminum (TMA), reduced the activity of the catalyst produced thereby compared to a catalyst formed with a silica having hydroxyl groups unreacted with such a scavenger. Silicas containing higher hydroxyl numbers produce catalysts of higher activity than silicas of lower hydroxyl numbers. The amount of hydroxyl groups, in mmoles/gram silica can be affected by the dehydration temperatures used to condition the silica. specifically, the dehydration temperatures of 600°C reduce the amount of reactive hydroxyl groups to 0.7 mmol per gram of silica for contact with the solution of aluminoxane and metallocene. By comparison, the dehydration temperatures of 250°C reduce the amount of reactive hydroxyl groups to 2 mmol per gram of silica for contact with the solution of aluminoxane and metallocene. Accordingly, the silica used in the process of the invention will preferably contain a silanol (OH) concentration of greater than 0.7 mmoles to up to 2.5 mmoles OH per gram of silica. In preferred embodiments, the concentration ranges from 1.6 to 2.5 mmoles/gram silica.

According to the process of the invention, all metallocene components can be dissolved with alumoxane and impregnated into the carrier. Catalyst preparation is typically undertaken under anhydrous conditions and in the absence of oxygen. Metal impregnation temperatures typically range from 0 to 60°C. Impregnation is effected with agitation. Contact of the silica with the impregnant aluminoxane solution results in a reaction product between the alumoxane and silica. The reaction can be detected by NMR analysis. The reaction results in depletion of any alumoxane in solution. In preferred embodiments, this results in no free alumoxane in the resulting catalyst. The resulting catalyst is characterized by very high transition metal and aluminum efficiencies.

The class of alumoxanes comprises oligomeric linear and/or cyclic alkylalumoxanes represented by the formula: R-(Al(R)-O)ₙ-AlR₂ for oligomeric, linear alumoxanes and (-Al(R)-O-)ₘ for oligomeric cyclic alumoxane wherein n is 1-40, preferably 10-20, m is 3-40, preferably 3-20 and R is a C₁-C₈ alkyl group and preferably methyl. MAO is a mixture of oligomers with a very wide distribution of molecular weights and usually with an average molecular weight of 800 to 1200. MAO is typically kept in solution in toluene.

The silica support is impregnated with a solution of alumoxane. The solution of alumoxane contains the metallocene compound(s), described below. The solvent for the alumoxane is preferably toluene. However, other aromatic hydrocarbons containing 6 to 10 carbon atoms may be used instead of the toluene; illustrative of such hydrocarbons are ethylbenzene, xylene, cumene, cyclopentane, cyclohexane, cycloheptane, or mixtures thereof. A halogenated hydrocarbon may be used. The solvent for the alumoxane is used to form a solution with a volume which is equal to or less than the pore volume of the silica. A critical aspect of the impregnation process is the use of a liquid medium in addition to the alumoxane solution. The liquid medium is an aliphatic or alicyclic hydrocarbon which contains 5 to 20 carbon atoms; illustrative compounds which can be used as the liquid medium include pentane, isopentane, hexane, isohexane, heptane, octane, nonane, decane, dodecane, cyclopentane, cyclohexane, and cycloheptane or mixture thereof. Isomers of these hydrocarbons could also be used.

The volume of the liquid medium is also critical in that this volume must be sufficient to form a slurry. This volume should be 2 to 15 times the pore volume of the support as measured by nitrogen adsorption method (BET method). For example, for a silica support with 1.5 cc/g pore volume, a minimum of 3 cc of the second medium, e.g., hexane, and a maximum of 20 cc/g silica would be employed.

To obtain a uniform distribution of methylalumoxane and metallocene on silica, it is critical that during the reaction step between methylalumoxane, metallocene, and silica the reactions are complete such that more than 99% of the methylalumoxane and metallocene have reacted with the silica surface or chemically adsorbed on the silica surface and negligible amount of methylalumoxane and metallocene remained in the liquid medium outside of the silica pores. Excess amount of methylalumoxane and metallocene would require extra washing steps to remove these excesses or the methylalumoxane could cross link or precipitated outside the silica pore forming a coating on the outside boundary of the silica resulting in non-uniform distribution of methylalumoxane and metallocene. Non-uniform distribution of methylalumoxane and metallocene catalyst not supported on silica surface, eventually can cause reactor fouling problems both in slurry reactor and in gas phase reactor.

The use of the liquid medium results in uniform dispersion of the metals on the surface and pores of the catalyst support. Use of the liquid medium improves aluminum distribution, reduces catalyst agglomeration and, indirectly or directly, increases continuity. The uniform distribution of aluminum is revealed in electron micrographs of the catalysts. Saturated hydrocarbon liquid was found to be a very effective medium to disperse silica, methylalumoxane in toluene, and metallocene to give a supported catalyst with very uniform distribution of metals within catalyst particles and among catalyst particles. The final catalyst was characterized by scanning electron microscope FTIR, and solid state NMR. The methylalumoxane, it was found, reacted with the silica hydroxyl group to form methylalumoxane silicate with essentially no free methyl-alumoxane left in the final catalyst as shown by FTIR and solid state NMR. We also found the aluminum distribution within the particle and among the particles are very uniformly distributed as measured by the Al/Si ration on the surface of the silica particle and across cross-sections of silica particles.

A common method to detect the distribution of various chemical elements, such as silicon, aluminum, carbon, oxygen, and zirconium, in particles less than 500 microns in size is the use of electron scanning microscopy. The description of the use of a scanning electron microscope is specified in the example section. In effect the catalyst particle are observed under magnification. The existence of various elements is detected by the energy dispersive spectrometer equipped on the scanning electron microscope. The distribution of each selected element can be displayed on a photograph. Judging from the variation in the intensity of each element among various particles, one can qualitatively determine the distribution of each element on each silica particle. To further quantify these observations, one can randomly select a sample of catalyst particles (for example, 25 particles) in the microscope and measure the aluminum and silicon signal for each silica particle. By dividing the aluminum by silicon signal, some of the variation in due sample angle and sample distance from the detector are canceled resulting in an aluminum to silicon signal ratio that can be correlated to the amount of aluminum reside inside the silica pore. In our examples, for each catalyst sample prepared, 25 Al/Si ratios were determined for each of the 25 randomly selected particles. Standard statistical calculation (reference: Box, G.E.P., et al. Statistics for Experimenters, Wey: New York, 1978; p. 40) will give an average Al/Si ratio and a standard deviation. Smaller standard deviation represents more uniform Al/Si ratio from one particle to another particle, and therefore more uniform distribution of the aluminum or silica. Larger standard deviation represent more variation in the Al/Si signal ratio from one particle to another particle, and therefore less uniform distribution of the aluminum. In our examples, it was shown that by using the method of reaction of silica with methylalumoxane and metallocene, the catalyst particles were found to have Al/Si signal ratio that have relatively small standard deviation of less than 25% of the average. Due to variation in reactor configuration, reactor size, flow rate of the reagents and the agitator speed, and also due to normal variation in the scanning electron microscope, the standard deviation could be as high as 50%.

Similarly, the Al/Si signal ratio can be determined for a cross-section of a catalyst particle. The catalyst particles were first sectioned, and 10 cross-sectioned particles were randomly chosen. The Al and Si signal were obtained for the center of each particle and the edge (defined as the 2 micron layer just underneath the outmost boundary of a catalyst particle) of each particle. Comparison of the average Al/Si signal ratio for (a) the surfaces of the catalyst particles, (b) the centers of the cross-sections of the catalyst particles, and (c) the edges of the cross-sections of the catalyst particles would indicate the uniform distribution of aluminum within the catalyst particles. In general, the difference among the Al/Si signal ratios from (a), (b) and (c) should not be more than 30% from each other and preferably less than 15% from each other.

Accordingly, the maximum volume of the alumoxane solution is the total pore volume of the carrier material sample. That maximum volume of the alumoxane solution insures that the solvent used in the alumoxane solution does not change the properties of the liquid medium chosen to disperse the silica. By way of example, if the pore volume of the carrier material is 1.65 cc/g, then the volume of alumoxane will be equal to or less than 1.65 cc/g of carrier material. Thus, the maximum volume of solution (of metallocene and alumoxane) will equal the total pore volume of the carrier, e.g. silica, which is the pore volume in, e.g., cc/g, times the total weight of the carrier used.

The solvent or the hydrocarbon liquid medium may be removed from the pores of the carrier material by heating and/or under a vacuum or purged with heating in an inert gas, such as nitrogen. The hydrocarbon liquid medium can also be removed by filtering or decanting. If elevated temperature is employed, the temperature conditions in this step are controlled to reduce, if not to eliminate, agglomeration of impregnated carrier particles and/or crosslinking of the alumoxane. In this step, solvent can be removed by evaporation effected at relatively low elevated temperatures of above 40° and below 50° to obviate agglomeration of catalyst particles and crosslinking of the alumoxane. Preferably drying is undertaken at 45°C or less for 5 to 7 hours. Although solvent can be removed by evaporation at relatively higher temperatures than that defined by the range above 40° and below 50°C, very short heating times schedules must be employed to obviate agglomeration of catalyst particles and crosslinking of the alumoxane, with reduction of catalyst activity. Accordingly, an active catalyst has been produced at drying temperature of 110°C at extremely short heating times, whereas at 45°C, drying can be undertaken for periods of several days.

The metallocene is added to the solution of the alumoxane prior to impregnating the carrier with the solution. The mole ratio of aluminum provided by aluminoxane, expressed as Al, to metallocene metal expressed as M (e.g. Zr), typically ranges from 25 to 10,000, preferably 75 to 980, and most preferably 100 to 350. An added advantage of the present invention is that this Al:Zr ratio can be directly controlled. In a preferred embodiment the alumoxane and metallocene compound are mixed together at ambient temperature for 0.1 to 24 hours, prior to use in the impregnated step. The solvent for the metallocene and alumoxane can be appropriate aromatic hydrocarbon solvents, such as toluene, xylene, ethyl benzene, cumene, or mixtures thereof, preferably it is toluene. In addition to the alumoxane solvent the silica impregnant medium comprises an aliphatic or alicyclic diluent. The catalysts prepared by the process of the invention may be used in the polymerization and/or copolymerization of ethylene and/or alpha-olefins of 3 to 10 carbon atoms and for producing products exhibiting a bulk density of 240 to 576 kg/m³ (15 to 36 lb/ft³). Some of the products are characterized by MFR of 14 to 25 (wherein said MFR is the ratio I21/I2 wherein I21 is measured at 190°C in accordance with ASTM D-1238, Condition F and I 2 is in accordance with ASTM D-1238, Condition E). The catalyst is typically in the form of particles, wherein said particles generally have an average particle size in the range of 1 to 500 microns; wherein said particles comprise silica, a transition metal and aluminum, and wherein the ratio of aluminum to transition metal preferably ranges from 70 to 350, and more preferably 100 to 350. The process of the invention typically comprises providing an amorphous porous hydrated silica and dehydrating said silica at a dehydration temperature of less than 300°C to provide a dehydrated silica having a silanol concentration of at least 0.7 millimoles per gram silica, wherein said dehydrated silica is further characterized by a pore volume typically in the range of 0.1 to 5 cc/gm; providing a volume of a mixture of a metallocene and an aluminoxane, wherein said volume of said mixture is equal to or less than the total pore volume of said dehydrated silica, wherein said metallocene preferably has a formula, CpₘMAₙBₚ, wherein Cp is a cyclopentadienyl or a substituted cyclopentadienyl group; m is 1 or 2; M is zirconium or hafnium; and each of A and B is selected from the group consisting of a halogen atom, a hydrogen atom and an alkyl group, providing that m+n+p is equal to the valence of the metal M; wherein said alumoxane has a formula (a) or (b); wherein (a) is R-(Al(R)-O)ₙ-AlR₂ for oligomeric, linear alumoxanes and (b) is (-Al(R)-O-)ₘ for oligomeric cyclic alumoxane wherein n is 1-40, m is 3-40, and R is a C₁-C₈ alkyl group; contacting said silica with said volume of said mixture, to allow impregnation of the pores of said silica with said mixture; and recovering an activated catalyst; the volume of the mixture of the metallocene and alumoxane is admixed with a second liquid medium, defined above, which is a dispersant for the transition metal and alumoxane.

The metallocene compound used in the process of the invention preferably has the formula CpₘMAₙBₚ in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium. In the above formula of the metallocene compound, the Cp group is an unsubstituted, a mono- or a polysubstituted cyclopenta-dienyl group. The substituents on the cyclopentadienyl group can be preferably straight-or branched chain C₁-C₆ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when m in the above formula of the metallocene compound is equal to 2, the cyclopentadienyl groups can be also bridged by polymethylene or dialkylsilane groups, such as -CH₂-, -CH₂-CH₂-, -CR'R"- and -CR'R"-CR'R"- where R' and R" are short alkyl groups or hydrogen, -Si(CH₃)₂-, Si(CH₃)₂-CH₂-CH₂-Si(CH₃)₂- and similar bridge groups. If the A and B substituents in the above formula of the metallocene compound are halogen atoms, they belong to the group of fluorine, chlorine, bromine or iodine. If the substituents A and B in the above formula of the metallocene compound are alkyl groups, they are preferably straight-chain or branched C₁-C₈ alkyl groups, such as methyl, ethyl, n-propyl, isopropyl, n-butyl, isobutyl, n-pentyl, n-hexyl or n-octyl or phenyl, benzyl, substituted phenyl, or substituted benzyl groups. If the substituents A and B in the above formula of the metallocene compounds are aryl groups, they are preferably phenyl or benzyl groups or derivatives of these groups.

Suitable metallocene compounds include: bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is zirconium or hafnium, halide groups are preferably chlorine and the alkyl groups are C₁-C₆ alkyls. Illustrative, but non-limiting examples of metallocenes include bis(cyclopentadienyl)zirconium dichloride, bis(cyclopentadienyl)hafnium dichloride, bis(cyclopentadienyl)zirconium dimethyl, bis(cyclopentadienyl)hafnium dimethyl, bis(cyclopentadienyl)zirconium hydridochloride, bis(cyclopentadienyl)hafnium hydridochloride, bis(n-butylcyclopentadienyl)zirconium dichloride, bis(n-butylcyclopentadienyl)hafnium dichloride, bis(n-butylcyclopentadienyl)zirconium dimethyl, bis(n-butylcyclopentadienyl)hafnium dimethyl, bis(n-butylcyclopentadienyl)zirconium hydridochloride, bis(n-butylcyclopentadienyl)hafnium hydridochloride, bis(pentamethylcyclopentadienyl)zirconium dichloride, bis(pentamethylcyclopentadienyl)hafnium dichloride, bis(n-butylcyclopentadienyl) zirconium dichloride, bis-(1,3-dimethylcyclopentadienyl)zirconium dichloride, bis(indenyl)zirconium dichloride, bis(4,5,6,7-tetrahydro-1-indenyl)zirconium dichloride, and ethylene-[bis(4,5,6,7-tetrahydro-1-indenyl)] zirconium dichloride.

The catalysts so-produced are effective to run at low pressures, up to, specifically no greater than, 6.9 mPa (1000 psi), at temperatures up to 130°C. These catalysts exhibit long catalyst life, high activity and productivity, and produce high bulk density products.

### Conditions for the polymerization and copolymerization of ethylene

Catalysts produced by the process of the invention may be employed in gas phase, in fluid bed gas phase, or in slurry polymerisation processes. The catalysts exhibit long catalyst life and allow for the production of linear low density polyethylene in the gas phase or in a slurry polymerization without reactor fouling. with respect to the slurry operation to produce LLDPE, particulate linear low density polyethylene is produced in the slurry reactor and is not swollen (by the solvent). The products from both the gas phase (e.g. fluid bed) and slurry have a high bulk density, which allows for increased throughput of product per weight of catalyst.

Preferably, the polymerization (copolymerization) is undertaken at a temperature and/or pressure below the sintering temperature of the polymer particles. Most preferably, the process is undertaken in the fluid bed gas phase or in a slurry reactor. The high activity of the catalysts produced by the process of the invention allow for efficacious low pressure fluid bed gas phase and/or slurry process product production. Much lower activity catalysts than those described herein may be employed in high pressure processes at pressures which exceed 400 psi, such as solution and high pressure slurry polymerizations. For the production of ethylene copolymers in the process of the present invention an operating temperature of 30° to 115°C is preferred, and a temperature of 70° to 106°C is most preferred. Temperatures of 75° to 90°C are used to prepare products having a density of 0.91 to 0.92 g/cc, and temperatures of 80° to 100°C are used to prepare products having a density of 0.92 to 0.94 g/cc, and temperatures of 90° to 115°C are used to prepare products having a density of 0.94 to 0.96 g/cc.

In the gas phase, linear low density production is conducted at 85°C and high density product is formed at 105°C. In slurry polymerization, linear low density production is conducted at 70°C and high density production is conducted at 90°C.

In polymerizations described herein, pressures are below 69 mPa (10000 psi), preferably below 6.9 mPa (1000 psi). The fluid bed reactor is operated at pressures of up to 6.9 mPa (1000 psi), and is preferably operated at a pressure of from 1.04 to 3.45 mPa (150 to 500 psi), with operation at the higher pressures in such ranges favoring heat transfer since an increase in pressure increases the unit volume heat capacity of the gas.

The partially or completely activated catalyst is injected into the bed at a point above the distribution plate at a rate equal to its consumption. Since the catalysts produced by the process of this invention are highly active, injection of the fully activated catalyst into the area below the distribution plate may cause polymerization to begin there and eventually cause plugging of the distribution plate. Injection into the bed, instead, aids in distributing the catalyst throughout the bed and precludes the formation of localized spots of high catalyst concentration.

The production rate of polymer in the bed is controlled by the rate of catalyst injection. Since any change in the rate of catalyst injection changes the rate of generation of the heat of reaction, the temperature of the recycle gas is adjusted to accommodate the change in rate of heat generation. Complete instrumentation of both the fluidized bed and the recycle gas cooling system is, of course, necessary to detect any temperature change in the bed so as to enable the operator to make a suitable adjustment in the temperature of the recycle gas.

Since the rate of heat generation is directly related to product formation, a measurement of the temperature rise of the gas across the reactor (the difference between inlet gas temperature and exit gas temperature) is determinative of the rate of particulate polymer formation at a constant gas velocity.

### The polymerization and copolymerization products

Both low density (0.91 to 0.939 g/cc) and high density (0.94 to 0.965 g/cc and above) products with high bulk density, low (hexane) extractables and granular morphology can be prepared in the slurry or gas phase reactor with no fouling. The resin produced has a high molecular weight, narrow molecular weight distribution, and homogeneous branching distribution. The catalyst ash contains small amounts of Zr and Al, e.g., less than 1 ppm Zr and 50 ppm Al. The high activity of the catalysts of the invention which also exhibit long catalyst life and produce high bulk density products are significant factors in the unexpected efficacy of these catalysts in catalytic polymerizations and copolymerizations of olefins.

Ethylene polymers, as well as copolymers of ethylene with one or more C₃-C₁₀ alpha-olefins, can be produced in accordance with the invention. Thus, copolymers having two monomeric units are possible as well as terpolymers having three monomeric units. Particular examples of such polymers include ethylene/1-butene copolymers, ethylene/1-hexene copolymers and ethylene/4-methyl-1-pentene copolymers.

Since the catalyst produced by the process of the invention is effective to incorporate comonomer in a regular manner the resin may contain blocks of polymerized product of alpha olefins of 3 to 10 carbon atoms in the resin backbone. These blocks will consist essentially of dimers, oligomers, polymers and admixtures thereof. Because of the excellent comonomer incorporation of the catalyst and the branching homogeneity of the resin, significant amount of hexene saving can be achieved.

Ethylene/1-butene and ethylene/1-hexene copolymers are the most preferred copolymers polymerized using catalysts made by the process of this invention. The ethylene copolymers produced preferably contain at least about 80% by weight of ethylene units. The catalysts made by the process of this invention may also be used in the polymerization of propylene and other alpha-olefins and in their to copolymerization. The structure of alpha-olefin polymers so-prepared depends on the structure of the cyclopentadienyl ligands attached to the metal atom in the catalyst precursor molecule. The catalysts made by the process of this invention can also be used in the polymerization of cycloolefins such as cyclopentene.

Hydrogen may be used as a chain transfer agent in the polymerization reaction of the present invention. The ratio of hydrogen/ethylene employed will vary between 0 to 2.0 moles of hydrogen per mole of ethylene in the gas phase. Any gas inert to the catalyst and reactants can also be present in the gas stream.

The catalysts prepared by the process of the invention exhibit high activity for polymerization of ethylene and higher alpha-olefins and allow the synthesis of ethylene polymers and copolymers with a relatively narrow molecular weight distribution and homogeneous branching distribution. The molecular weight distribution is determined as MFR which ranges from 15 to 25, in polymerizations using catalysts made by the process of the invention. Branching distribution in ethylene copolymers is evaluated on the basis of the resin's melting point. Relatively homogeneous branching distribution is one which the melting point ranges from 100° to 120°C, depending on comonomer composition. In this embodiment, the catalyst made by the process of the invention contains only one source of transition metal, which is in the form of a metallocene.

Particularly, the copolymer products contain 0.1 to 2 ppm of Zr. The product has an average particle size of 0.038-0.089 cm (0.015-0.035 inches), settled bulk density from 320 to 576 kg/m³ (20 to 36 lb/ft³). The particles of product are spherical. The narrow molecular weight distribution low density copolymers have been produced with MI of one (1) and less than 1, down to 0.01. The low density products exhibit a MI which can range from 0.01 to 5, preferably from 0.5 to 4, and most preferably 0.8 to 2.0. The low density products also exhibit a melt flow ratio (MFR) of 14 to 25 preferably from 14 to 20; products with MFR ranging from 16 to 18 have been made; MFR is the ratio I 21/I2 [wherein I21 is measured at 190°C in accordance with ASTM D-1238, Condition F, and I2 is measured in accordance with ASTM D-1238, Condition E]. When fabricated into films, the films of the copolymers exhibit balanced tear strength, as measured by ASTM D-1922. Furthermore the LLDPE exhibits Dart Drop Impact values as measured by ASTM D-1709 of greater than 800. The products of the catalysis with the catalyst made by the process of the invention can be used as films which are substantially free of gels. The films exhibit very low haze values as measured by ASTM D-1003, preferably in the range of 3 to 10, more preferably from 5 to 7.

### EXAMPLES

### Catalyst Preparation

### Example 1

Davison 955 silica was dehydrated at 250°C. 10.0 grams of this dehydrated silica were added to a 300 ml flask; and 50 cc of heptane were added to the silica to form a slurry mixture. In a separate bottle, 0.142 grams of bis(n-butylcyclopentadienyl) zirconium dichloride was dissolved in 13.41 grams of a 30 wt.% methylalumoxane solution in toluene. This solution was added slowly to the silica over a period of 30 minutes. The slurry mixture was then dried at 45°C with nitrogen purge for 16 hours. 13.7 grams of free flowing catalyst were obtained and analyzed to contain 13.2 wt.% Al and 0.23 wt.% Zr.

### Example 2

Davison 955 silica was dehydrated at 250°C. 20.07 grams of this dehydrated silica were added to a 500 ml flask with an addition funnel and equipped with a pedal stirrer. 100 cc isohexane were added through the addition funnel into the silica to form a slurry mixture. In a separate bottle, 0.284 grams of bis(n-butylcyclopentadienyl) zirconium dichloride was dissolved in 32.08 cc of a 30 wt.% methyalumoxane solution in toluene. This solution was added slowly over a period of 30 minutes. The slurry was mixed thoroughly, and 20 cc of the clear solvent were decanted from the slurry for analysis of Al and Zr. The slurry mixture was then dried at 45°C with nitrogen purge for 16 hours. 27.8 grams of free flowing catalyst were collected and analyzed to contain 12.0 wt.% Al and 0.22 wt.% Zr.

Analysis of the 20 cc solvent decanted from the slurry mixture was shown to contain 3.30 mg of Al and 0.060 mg of Zr. Calculation showed that 99.4% of the total Al from the MAO reacted with the silica, and only 0.56% of the total Al from MAO remained in the solvent. Similarly, 99.4% of the total Zr from metallocene was in the silica and 0.60% of the total Zr from metallocene remained in the solvent phase.

### Example 3

Davison 955 silica was dehydrated at 250°C. 20.162 grams of this dehydrated silica were added to a 500 ml flask equipped with an addition funnel and a pedal stirrer. 100 cc isohexane and 0.5 cc of 15 wt.% trimethylaluminum in heptane were added into the addition funnel. This solution was then added to the silica to form a slurry mixture. In a separate bottle, 0.473 grams bis(n-butylcyclopentadienyl) zirconium dichloride was dissolved in 32.2 cc of a 30 wt.% methylalumoxane solution in toluene. This solution was then added slowly over a period of 30 minutes. The slurry was mixed thoroughly for 30 minutes and 20 cc of the clear solvent was decanted from the slurry for Al and Zr analysis. The slurry mixture was then dried at 45°C with nitrogen purge for 16 hours. 27.412 grams of free flowing catalyst were collected and analyzed to contain 11.8 wt.% Al and 0.35 wt.% Zr.

Analysis of the 20 cc solvent decanted from the slurry mixture was shown to contain 0.53 mg of Al and 0.014 mg of Zr. Calculation showed that 99.9% of the total Al from the MAO reacted with the silica and 0.09% of the total Al from MAO remained in the solvent. Similarly, 99.9% of the total Zr from metallocene were inside the silica pore and 0.09% of the total Zr from metallocene remained in the solvent phase.

### Example 4 (Comparative example)

Davison 955 silica was dehydrated at 600°C. 15.63 grams of this dehydrated silica were added to a 500 ml flask equipped with an addition funnel and a pedal stirrer. 75 cc isohexane and 0.4 cc of 15 wt.% trimethylaluminum in heptane were added into the addition funnel. This solution was then added to the silica to form a slurry mixture. In a separate bottle, 0.367 grams bis(n-butylcyclopentadienyl) zirconium dichloride was dissolved in 22.74 cc of a 30 wt.% methylalumoxane solution in toluene. This solution was then added slowly over a period of 30 minutes. The slurry was mixed thoroughly for 30 minutes and 15 cc of solvent were then decanted from the slurry for Al and Zr analysis. The solvent phase was cloudy and white in color, indicative of excessive amount of methylalumoxane that did not react with the silica. The slurry mixture was then dried at 45°C with nitrogen purge for 16 hours. 20.5 grams of free flowing powder was collected and analyzed to contain 11.4 wt.% Al and 0.32 wt.% Zr. Analysis of the 15 cc solvent decanted from the slurry mixture was shown to contain 41.2 mg of Al and 1.27 mg of Zr. Calculation showed that 90.7% of the total Al from the MAO reacted with the silica and 9.29% of the total Al from MAO remained in the solvent. Similarly, 89.8% of the total Zr from metallocene were inside the silica pore and 10.23% of the total Zr from metallocene remained in the solvent phase.

### Example 5

Davison 955 silica was dehydrated at 600°C. 20.06 grams of this dehydrated silica were added to a 500 ml flask with an addition funnel and a pedal stirrer attached. 100 cc isohexane and 0.5cc of 15 wt.% trimethylaluminum in heptane were added to the addition funnel. This solution was then added to the silica to form a slurry mixture. In a separate bottle, 0.325 grams bis(n-butylcyclopentadienyl) zirconium dichloride was dissolved in 20.84 cc of a 30 wt.% methylalumoxane solution in toluene and additional 7 cc of toluene were added. This solution was then added slowly over a period of 30 minutes to the silica. The slurry was then thoroughly mixed for 30 minutes and 20 cc of solvent were then decanted from the slurry for Al and Zr analysis. The slurry mixture was then dried at 45°C with nitrogen purge for 16 hours. 26.0 grams of free flowing powder were collected and analyzed to contain 9.51 wt.% Al and 0.27 wt.% Zr.

Analysis of the 20 cc solvent decanted from the slurry mixture was shown to contain 1.62 mg of Al and 0.024 mg of Zr. Calculation showed that 99.6% of the total Al from the MAO reacted with the silica and 0.37% of the total Al from MAO remained in the solvent. Similarly, 99.8% of the total Zr from metallocene were inside the silica pore and 0.20% of the total Zr from metallocene remained in the solvent phase.

### Example 6

Same procedure was used as example 5 except that 16.1 cc of 30 wt% methylalumoxane and 0.236 gram of bis(n-butylcyclopentadienyl) zirconium dichloride was used. 23.985 grams of a free flowing powder catalyst were collected and analyzed to contain 7.36 wt.% Al and 0.22 wt.% Zr.

Analysis of the 20 cc solvent decanted from the slurry mixture was shown to contain 0.13 mg of Al and 0.0037 mg of Zr. Calculation showed that 99.96% of the total Al from the MAO reacted with the silica and 0.04% of the total Al from MAO remained in the solvent. Similarly, 99.9% of the total Zr from metallocene were inside the silica pore and 0.04% of the total Zr from metallocene remained in the solvent phase.

### Example 7

Silica was dehydrated at 250°C. 5.00 grams of this silica were added to a 100 ml Schlenk flask equipped with a magnetic stirrer. 25 cc of isohexane were transferred into the flask to form a slurry mixture. This slurry mixture was chilled in an ice bath at 0°C. In a separate bottle, 0.047 grams of bis(n-butylcyclopentadienyl) zirconium dichloride was dissolved in 7.7 cc of 30 wt.% methylalumoxane in toluene. This solution was then transferred slowly into the silica slurry over a period of 5 minutes while stirring vigorously. The slurry mixture was then dried at 45°C with nitrogen purge for 4 hours. 6.3 grams of free flowing catalyst were obtained and analyzed to contain 11.9 wt.% Al and 0.15 wt.% Zr.

### Example 8

Silica was dehydrated at 250°C. 5.0 gram of this silica were added to a 100 ml Schlenk flask equipped with a magnetic stirrer. 25 cc of isohexane were transferred into the flask to form a slurry mixture. In a separate bottle, 0.047 grams of bis(n-butylcyclopentadienyl) zirconium dichloride was dissolved in 5.5 cc of 30 wt.% methylalumoxane in toluene. This solution was then transferred slowly into the silica slurry over a period of 10 minutes with vigorous stirring. The slurry mixture was then dried at 45°C with nitrogen purge for 4 hours. 6.4 grams of free flowing dry catalyst were collected and analyzed to contain 10.3 wt.% Al and 0.16 wt.% Zr.

### Example 9

Silica was dehydrated at 600°C. 5.0 grams of this silica were weighed into a 100 ml Schlenk flask equipped with a magnetic stirrer. 25 cc of isohexane were transferred into the flask to form a slurry mixture. In a separate bottle, 0.047 gram of bis(n-butylcyclopentadienyl) zirconium dichloride was dissolved in 5.5 cc of 30 wt.% methylaluminoxane in toluene and additional 1.9 cc of toluene was added. This solution was then transferred slowly into the silica slurry over a period of 10 minutes with vigorous stirring. The slurry mixture was then stirred for an additional 30 minutes before the clear solvent layer was decanted off. The remaining mixture was then dried at 45°C with nitrogen purge for 16 hours. 6.3 grams of free flowing dry catalyst were obtained and analyzed to contain 10.4 wt.% Al and 0.18 wt.% Zr.

### Polymerization Results

Polymerization was conducted in a 2.5 liter autoclave which was free from air and moisture by purging with nitrogen at 120°C. The autoclave was cooled to 25°C and 1 liter of polymerization grade heptane, 100 cc hexene, 2 cc triisobutylaluminum (25 wt.% in heptane) were added to the reactor. The reactor temperature was then equilibrated at 70°C with ethylene at 882 kPa g (128 psig) total pressure. About 100 mg of a catalyst from Example 1 to 7 were used in the reactor. Polymerization started immediately and was allowed to continue for about 60 minutes before polymerization was stopped by infection of methanol. The solvent was removed and polymer was dried in a vacuum oven at 60°C. Results are summarized in Table 1:

**Table 1**

| Catalyst | Productivity g/g-cat/hr | Al efficiency kg/g-Al/hr | Zr efficiency kg/g-Zr/hr | I2 | I21 | MFR | Density g/cc | Hexene mole % |
|---|---|---|---|---|---|---|---|---|
| 1 | 2500 | 18.8 | 1100 | 3.4 | 67.6 | 19.6 | 0.922 | 1.9 |
| 2 | 2700 | 22.2 | 1200 | 2.6 | 44.3 | 20.6 | 0.920 | 2.5 |
| 3 | 4000 | 33.7 | 1100 | 2.8 | 57.0 | 20.2 | 0.922 | 1.9 |
| 4 | 3600 | 31.9 | 1100 | 1.2 | 28.7 | 24.5 | 0.920 | 2.3 |
| 5 | 2500 | 26.7 | 900 | 2.7 | 54.9 | 20.5 | 0.917 | 2.4 |
| 6 | 1700 | 23.2 | 800 | 3.3 | 72.0 | 21.7 | 0.924 | 2.1 |
| 7 | 2700 | 22.7 | 1800 | 2.5 | 51.8 | 20.8 | 0.919 | 2.3 |
| 8 | 2400 | 23.1 | 1500 | 3.0 | 64.3 | 21.4 | 0.922 | 2.1 |
| 9 | 2500 | 24.1 | 1400 | 2.9 | 61.1 | 21.1 | 0.922 | 2.0 |

In all examples above, free flowing granular resin was obtained with high bulk density of more than 0.30 g/cc except for the comparative example 4. In example 4 reactor fouling was observed. Reactor temperature control was poor or the ethylene feed line was plugged leading to early shut down of reactor. When the reactor was opened, large amount of resin sheet(s) and chunks were found on reactor wall, agitator, and thermocouple.

### Uniform Distribution of Methylalumoxane on Support

The following examples illustrate the uniform distribution of aluminum (from methylalumoxane) among silica particles and within each silica particles:

### Example 10

Davison 955 silica was dehydrated at 250°C. 655 grams of this dehydrated silica were added to a 7.6x10⁻³ m (two-gallon) mix-vessel; and 3280 cc of isopentane were added to the silica to form a slurry mixture. In a separate step, 6.174 grams of bis(n-butylcyclopentadienyl) zirconium dichloride were dissolved in 923 grams of a 30 wt.% methylalumoxane solution in toluene. This solution was then pumped slowly at 12.0 cc/minute to the slurry mixture which was agitated at 120 rpm. After the addition, the slurry was allowed to mixed for 14 minutes and was then dried at 45°C with nitrogen purge for 15 hours. 886 grams of free flowing catalyst were obtained and analyzed to contain 12.7 wt.% Al and 0.15 wt.% Zr.

### Example 11

Same as Example 10, except that 664 grams of silica, 3325 cc of isopentane, 934 grams of methylalumoxane, and 6.250 grams of bis(n- butylcyclopentadienyl) were used. 829 grams of free flowing catalyst were obtained and analyzed to contain 12.5 wt.% Al and 0.15 wt.% Zr.

### Example 12

Same as Example 10, except that 658 grams of silica, 3290 cc of isopentane, 923.4 grams of methylalumoxane, and 6.200 grams of bis(n- butylcyclopentadienyl) were used. 912 grams of free flowing catalyst were obtained and analyzed to contain 12.2 wt.% Al and 0.14 wt.% Zr.

### Microscopy Analysis

These catalysts were examined carefully using the microscopy method described below:

### 1. Equipment and Analysis:

### Equipment Settings

The catalysts were analyzed with a JEOL JSM-840A SEM equipped with a PGT OMEGA EDS detector. EDS scans and maps were collected on a SUN Sparcstation and processed with PGT X-Ray and Imaging Microanalysis Systems (IMIX) software. The EDS detection limit is 0.05-1.0 wt.% in a 1-8m³ volume, depending on the matrix. The gold peaks in the spectra are from the conductive coating applied using a SPI-MODULE sputter coater to prevent charge buildup during the analysis.

All 12.8K pixel particle maps were collected at a 39mm. working distance (WD), 20KV accelerating voltage, 6m amp probe current, from secondary electron images (SEI) at 300X magnification (sections were collected at 500X) with the objective aperture set at the 2 position. A filter assigns brightness levels to each pixel which correlate with the relative selected element counts (the highest concentration appears brightest while black indicates the absence of the element). Use of the Al/Si ratio eliminates topographical interference.

EDS Small area particle scans (1-20 m²) were collected at 2000-4000X. Cross-sectioned particle scans were collected at the core and at the edge.

### Surface Analysis of Aluminum and Silicon Elemental Distribution

Catalyst sample was mixed well and homogenized by agitation. A representative sample was taken by a small spatula. The catalyst powder was distributed on a 3 cm² area of double-sided tape attached to a carbon disk. This sample was then coated with gold using a SPI-MODULE^{tm} sputter coater. The disk was placed into a JEOL SEM specimen holder and viewed under the conditions specified for the JEOL JSM 840A SEM. An area containing at least 25 particles at 300X magnification was selected and imaged in the secondary electron image (SEI) mode. 25 particles from this image were randomly chosen and were labeled from 1 to 25 on the photograph. An EDS (energy dispersive spectrometer) spectrum was acquired using an OMEGA (or PRISM loaner) lithium-drifted silicon crystal (Si(Li)) ultra-thin window detector at 6namps probe current using PGT (Princeton Gamma-Tech) IMIX software (version 8). Windows for aluminum, silicon, and oxygen were selected. Image collection was selected from the root menu; x-ray maps (map size 12800 or 25600 pixels) were collected from the selected area and printed on a Mitsubishi CP210U color video processor. X-ray analysis/x-ray collect was selected from the root menu. A spectrum was acquired with the conditions set at 10 seconds, 6nA, 20kV accelerating voltage, 30° take-off angle from the a 4 m² small area scan of each numbered particle at 4,000X. From the image menu, integrals at FWHM for the aluminum and silicon peaks were recorded for each of the 25 particles. The total counts for aluminum was divided by the total counts for silicon for each of the 25 particles. Use of the Al/Si ratio eliminates topographical variations for each point analyzed. The 25 Al/Si ratios were then arithmetically averaged to give value for the average Al/Si ratio at surface and the standard deviation of these 25 Al/Si ratios was calculated by standard statistical method. Results are shown in Table 2A.

### Cross-section Analysis of Aluminum and Silicon Elemental Distribution

Prior to gold-coating the disk, the catalyst powder was sectioned by running a microtome blade across the tape at a 30° angle. An area containing at least 5 cross-sectioned particles at 500X was selected, imaged, and mapped as in the surface analysis. 5 to 10 particles were randomly chosen from the picture and labelled from 1 to 10. Aluminum and silica signal were collected in similar manner as described in the surface analysis, except that for each particle, the aluminum and silicon signals were collected at the center of each particle and then at the edge of each particle. The edge is typically within 2 microns from the outermost boundary of the silica cross-section. The aluminum and silicon signals were collected from the 5 to 10 particles. The total counts for aluminum was divided by the total counts for silicon for all the signals. Use of the Al/Si ratio eliminates topographical variations for each point analyzed. The 5 to 10 Al/Si ratios at the center of the silica particle were then arithmetically averaged to give value for the average Al/Si ratio at center, and the standard deviation of these 5 to 10 Al/Si ratios at center were calculated by standard statistical method. Results are shown in Table 2B. Similarly, calculation were obtained for the average Al/Si ratio at edge and the standard deviation of these 5 to 10 Al/Si ratios at edge. Results are shown in Table 2C.

### 2. Results

**Table 2A:**

| Surface analysis: Al and Si Signals Measured from 25 Particles | | | |
|---|---|---|---|
| **Catalyst Batch Examples** | **Average Al/Si at Surface** | **Standard deviation** | **Standard Deviation as % of Average Al/Si** |
| 10 | 0.34 | 0.05 | 15% |
| 11 | 0.34 | 0.05 | 15% |
| 12 | 0.37 | 0.05 | 14% |

**Table 2B:**

| Cross-section Analysis at Silica Center Al and Si Signals Measured from 5 to 10 Silica Particles | | | |
|---|---|---|---|
| **Catalyst Batch Examples** | **Average Al/Si at center of cross- section** | **Standard Deviation** | **Standard Deviation as % of Average Al/Si** |
| 10 | 0.36 | 0.06 | 17% |
| 11 | 0.35 | 0.06 | 17% |
| 12 | 0.34 | 0.07 | 21% |

**Table 2C:**

| Cross-section Analysis at silica Edge Al and Si Signals Measured from 5 to 10 Silica Particles | | | |
|---|---|---|---|
| **Catalyst Batch Examples** | **Average Al/Si at edge of cross-section** | **Standard Deviation** | **Standard Deviation as % of Average Al/Si** |
| 10 | 0.36 | 0.03 | 8% |
| 11 | 0.34 | 0.06 | 18% |
| 12 | 0.33 | 0.04 | 12% |

The distribution of the Al element is very uniform as shown by the average Al/Si ratios. All the average Al/Si ratios are within the range of 0.33 to 0.37; indicating that the Al distribution is very uniform from one example to another example. It should be noted that as the Al loading on the silica changes this Al/Si ratio would change also. What is important here is that the ratio is very uniform from sample to sample.

Also by comparing the Al/Si ratio at the surface, at the cross-section center, and at the cross section edge, one observed a range of 0.33 to 0.37 indicating that the Al distribution within each silica particle is very uniform.

### FTIR and Solid State NMR Spectroscopy

A spectrum of FTIR and a spectrum of solid state NMR of a catalyst prepared similar to example 10 spectra showed that the hydroxyl group on the silica had been reacted with the methyalumoxane and that the methylalumoxane after reaction with the silica no longer had the same solid state NMR signal confirming the chemical change in the methylalumoxane.

Catalysts prepared by this method show very uniform distribution of aluminum element (derived from alumoxane) within the silica particles and among the silica particles. The uniform distribution of metals is determined by microscopy techniques and the catalyst satisfies the following relationships:
1. The Al/Si ratio at catalyst outer surfaces has a standard deviation is no more than 25% of the average Al/Si ratio at catalyst surfaces.
2. The Al/Si ratio at center of cross-sectioned catalyst particles has standard deviation that is no more than 40% of the average Al/Si ratio at center of cross sectioned catalyst particles.
3. The Al/Si ratio at edge of cross-sectioned catalyst particles has standard deviation that is no more than 40% of the average Al/Si ratio at edge of cross-sectioned catalyst particles.
4. (Average Al/Si surface - Average Al/Si cross section edge)/Average Al/Si surface <25%
5. (Average Al/Si cross section edge - Average Al/Si cross section center)/Average Al/Si cross section edge <30%

Catalysts that do not contain Al and Si are excluded, by the foregoing criteria, and catalyst, that are overloaded with methylalumoxane would also be excluded due to an overlayer of Al.

During the catalyst preparation, the Al from MAO reacted with the silica quickly such that less than 1% of the total Al from MAO was still left in the solvent. Most of the Al from MAO was anchored in the silica sites, and therefore no washing step is required.

## Claims

1. A process for preparing a supported metallocene catalyst, the process comprising:
a)
(i) contacting silica having a concentration of silanol groups of at least 0.7 mmol per gram of silica with an aliphatic or alicyclic hydrocarbon containing 5 to 20 carbon atoms, or a mixture of such hydrocarbon diluents, wherein the diluent is present in an amount of 2 to 15 times the pore volume of the silica, to form a slurry and
ii) thereafter, contacting the slurry with an aromatic solution of a metallocene and alumoxane in an aromatic hydrocarbon containing 6 to 10 carbon atoms, wherein the volume of the aromatic solution is equal to or less than the pore volume of the silica;
b) allowing the alumoxane and metallocene to react with the silica such that more than 99% of the alumoxane and 99% of the metallocene are impregnated on to a surface of the silica; and
c) recovering a free flowing catalyst powder, wherein the resulting catalyst only comprises one transition metal, which is in the form of a metallocene.

2. A process according to claim 1, wherein the metallocene has a formula, CpₘMAₙBₚ, wherein:
Cp is a cyclopentadienyl or a substituted cyclopentadienyl group;
m is 1 or 2;
M is zirconium or hafnium; and
each of A and B is selected from the group consisting of a halogen atom, a hydrogen atom and an alkyl group, providing that m+n+p is equal to the valence of the metal M; and
wherein said alumoxane has a formula (a) or (b), wherein (a) is R-(Al(R)-O)ₙ-AlR₂ for oligomeric, linear alumoxanes and (b) is (-Al(R)-O-)ₘ for oligomeric cyclic alumoxanes, wherein n is 1-40, m is 3-40, and R comprises a C₁-C₈ alkyl group.

3. A process according to claim 1 or claim 2, wherein the silica has a concentration of silanol groups of between 1.6 and 2.5 mmol per gram of silica.

4. A process according to any preceding claim, wherein the alumoxane is methylalumoxane.

5. A process according to any preceding claim, wherein the amounts of alumoxane and metallocene employed are such that the molar ratio of aluminium to transition metal in the resulting catalyst is in the range 100 to 350.

6. A process according to any preceding claim, wherein the aromatic hydrocarbon is toluene.

7. A process according to any of claims 1 to 5, wherein the aromatic hydrocarbon is an halogenated hydrocarbon.

8. A process according to any preceding claim, wherein the hydrocarbon diluent is selected from the group consisting of cyclopentane, cyclohexane, cycloheptane, pentane, isopentane, hexane, isohexane, heptane, octane, nonane, decane, dodecane and admixtures thereof.

9. A process according to any preceding claim, wherein the alumoxane is chemically reacted on to a surface of the silica.

## Patentansprüche

1. Verfahren zur Herstellung eines getragenen Metallocenkatalysators, wobei das Verfahren umfaßt:
a)
(i) Kontakt von Siliciumdioxid, das eine Konzentration der Silanolgruppen von mindestens 0,7 mmol/g Siliciumdioxid aufweist, mit einem aliphatischen oder alicyclischen Kohlenwasserstoff mit 5 bis 20 Kohlenstoffatomen oder einem Gemisch derartiger Verdünnungsmittel aus einem Kohlenwasserstoff, wobei das Verdünnungsmittel in einer Menge vorliegt, die das 2- bis 15-Fache des Porenvolumens des Siliciumdioxids beträgt, wodurch eine Aufschlämmung erzeugt wird, und
(ii) anschließender Kontakt der Aufschlämmung mit einer Aromatenlösung eines Metallocens und Alumoxans in einem aromatischen Kohlenwasserstoff mit 6 bis 10 Kohlenstoffatomen, wobei das Volumen der Aromatenlösung gleich oder kleiner als das Porenvolumen des Siliciumdioxids ist;
b) Ermöglichen, daß das Alumoxan und Metallocen mit dem Siliciumdioxid reagieren, so daß mehr als 99 % des Alumoxans und 99% des Metallocens auf die Öberfläche des Siliciumdioxids imprägniert sind; und
c) Gewinnen eines frei fließenden Katalysatorpulvers,
wobei der entstandene Katalysator nur ein Übergangsmetall umfaßt, das in Form eines Metallocens vorliegt.

2. Verfahren nach Anspruch 1, wobei das Metallocen die Formel
CpₘMAₙBₚ
aufweist, worin:
Cp eine Cyclopentadienyl- oder eine substituierte Cyclopentadienylgruppe ist;
m 1 oder 2 ist;
M Zirconium oder Hafnium ist;
A und B jeweils aus der Gruppe ausgewählt sind, die aus einem Halogenatom, einem Wasserstoffatom und einer Alkylgruppe besteht, mit der Maßgabe, daß m + n + p gleich der Wertigkeit des Metalls M ist; und
wobei das Alumoxan die Formel (a) oder (b) hat, wobei
(a) R-(Al(R)-O)ₙ-AlR₂ für oligomere, lineare Alumoxane und
(b) (-Al(R)-O-)ₘ für oligomere, cyclische Alumoxane ist,
wobei n 1 bis 40 ist, m 3 bis 40 ist und R eine C₁-C₈-Alkylgruppe umfaßt.

3. Verfahren nach Anspruch 1 oder Anspruch 2, wobei das Siliciumdioxid eine Konzentration der Silanolgruppen von 1,6 bis 2,5 mmol/g Siliciumdioxid aufweist.

4. Verfahren nach einem der vorstehenden Ansprüche, wobei das Alumoxan Methylalumoxan ist.

5. Verfahren nach einem der vorstehenden Ansprüche, wobei die verwendeten Mengen von Alumoxan und Metallocen derart sind daß das Molverhältnis zwischen Aluminium und Übergangsmetall im entstehenden Katalysator im Bereich von 100 bis 350 liegt

6. Verfahren nach einem der vorstehenden Ansprüche, wobei der aromatische Kohlenwasserstoff Toluol ist.

7. Verfahren nach einem der Ansprüche 1 bis 5, wobei der aromatische Kohlenwasserstoff ein halogenierter Kohlenwasserstoff ist.

8. Verfahren nach einem der vorstehenden Ansprüche, wobei das Verdünnungsmittel aus einem Kohlenwasserstoff aus der Gruppe ausgewählt ist, die aus Cyclopentan, Cyclohexan, Cycloheptan, Pentan, Isopentan, Hexan, Isohexan, Heptan, Octan, Nonan, Decan, Dodecan und Gemischen davon besteht.

9. Verfahren nach einem der vorstehenden Ansprüche, wobei das Alumoxan chemisch mit der Oberfläche des Siliciumdioxids reagiert hat.

## Revendications

1. Procédé de préparation d'un catalyseur métallocène supporté, le procédé comprenant les étapes consistant à :
a)
(i) mettre en contact de la silice ayant une concentration en groupes silanol d'au moins 0,7 mmol par gramme de silice avec un hydrocarbure aliphatique ou alicyclique contenant 5 à 20 atomes de carbone, ou un mélange de tels diluants hydrocarbonés, dans lequel le diluant est présent en une quantité de 2 à 15 fois le volume de pore de la silice pour former une suspension épaisse et
(ii) ensuite mettre en contact la suspension épaisse avec une solution aromatique d'un métallocène et d'alumoxane dans un hydrocarbure aromatique contenant 6 à 10 atomes de carbone, dans lequel le volume de solution aromatique est égal ou inférieur au volume de pore de la silice ;
b) laisser l'alumoxane et le métallocène réagir avec la silice de sorte que plus de 99 % de l'alumoxane et 99 % du métallocène sont imprégnés sur une surface de la silice ; et
c) récupérer une poudre de catalyseur à écoulement libre ; dans lequel le catalyseur résultant ne comprend qu'un métal de transition, qui est sous la forme d'un métallocène.

2. Procédé selon la revendication 1, dans lequel le métallocène a pour formule CpₘMAₙBₚ, dans laquelle
Cp est un groupe cyclopentadiényle ou cyclopentadiényle substitué ;
m vaut 1 ou 2 ;
M est le zirconium ou l'hafnium ; et
chacun de A et B est choisi dans le groupe consistant en un atome d'halogène, un atome d'hydrogène et un groupe alkyle, à condition que m+n+p soit égal à la valence du métal M ; et
dans lequel ledit alumoxane a pour formule (a) ou (b), dans laquelle (a) est R-(Al(R)-O)ₙAlR₂ pour des alumoxanes linéaires oligomères et (b) est (-Al(R)-O-)ₘ pour des alumoxanes cycliques oligomères, dans lesquelles n vaut 1 à 40, m vaut 3 à 40 et R comprend un groupe alkyle en C₁ à C₈.

3. Procédé selon la revendication 1 ou 2, dans lequel la silice a une concentration en groupes silanol comprise entre 1,6 et 2,5 mmol par gramme de silice.

4. Procédé selon l'une quelconque des revendications précédentes, dans lequel l'alumoxane est le méthylalumoxane.

5. Procédé selon l'une quelconque des revendications précédentes, dans lequel les quantités d'alumoxane et de métallocène employées sont telles que le rapport molaire de l'aluminium sur le métal de transition dans le catalyseur résultant est dans la gamme de 100 à 350.

6. Procédé selon l'une quelconque des revendications précédentes, dans lequel l'hydrocarbure aromatique est le toluène.

7. Procédé selon l'une quelconque des revendications 1 à 5, dans lequel l'hydrocarbure aromatique est un hydrocarbure halogéné.

8. Procédé selon l'une quelconque des revendications précédentes, dans lequel le diluant hydrocarboné est choisi dans le groupe consistant en le cyclopentane, le cyclohexane, le cycloheptane, le pentane, l'isopentane, l'hexane, l'isohexane, l'heptane, l'octane, le nonane, le décane, le dodécane et les mélanges de ceux-ci.

9. Procédé selon l'une quelconque des revendications précédentes, dans lequel l'alumoxane est mis à réagir chimiquement sur une surface de la silice.
